# EUROPEAN PATENT SPECIFICATION

(11) **EP 4 054 295 B1**
(45) Date of publication and mention of the grant of the patent: **25.06.2025**
(21) Application number: 21160191.9
(22) Date of filing: 02.03.2021
(51) Int. Cl.: H05B 47/115, H05B 47/175

(54) **SHARING LIGHTING CONTROL NETWORK STATUS INFORMATION**
GEMEINSAME VERWENDUNG VON STATUSINFORMATIONEN FÜR EIN BELEUCHTUNGSSTEUERUNGSNETZWERK
PARTAGE D'INFORMATIONS D'ÉTAT DE RÉSEAU DE COMMANDE D'ÉCLAIRAGE

(43) Date of publication of application: 07.09.2022
(73) Proprietor: Helvar Oy Ab, 02150 Espoo (FI)
(72) Inventor: JUSLÉN, Henri, 02150 ESPOO (FI); AHOLA, Jukka, 02150 ESPOO (FI)
(74) Representative: Berggren Oy

(56) References cited:
- WO-A1-2014/099958
- US-A1- 2018 310 387
- US-A1- 2019 182 934

## Description

### TECHNICAL FIELD

The example and non-limiting embodiments of the present invention relate to delivery of status information available in a lighting control network to external entities to allow for usage of this information for controlling external systems.

### BACKGROUND

A lighting system applied for illuminating a space, e.g. a building or an outdoor area, typically comprises a plurality of luminaires that operate based at least in part on observations of one or more environmental characteristics in the space the lighting system serves to illuminate, e.g. on sensor data obtained via one or more occupancy sensors and/or one or more light sensors arranged in the space. The luminaires and the sensors may be communicatively coupled to each other via a wireless or wired communication network, the luminaires and sensors hence serving as nodes of a lighting control network that enables a node of the lighting control network to share information of its operational status with other nodes of the lighting control network and to obtain information of operational status of other nodes of the lighting control network to facilitate lighting control. Such sharing of status information enables timely and efficient control in the luminaires of the lighting system.

The status information shared within the lighting control network may be useful information for controlling other services or functions available in the space, such as HVAC and/or other building automation. On the other hand, integrating entities of such external services into the lighting control network as nodes of the lighting control network runs a risk of compromising security and reliability of the lighting control, whereas coupling entities of such other services to the lighting control network via a gateway typically requires laborious manual configuration of the gateway functionality while it necessarily leads into an inflexible approach that is tailored to a specific pair of a lighting control network and an external system.

In related art, WO 2014/099958 A1 discloses a lighting network where control of the lighting fixtures in the network may be distributed among the lighting fixtures. The lighting fixtures may be broken into groups that are associated with different lighting zones. Certain lighting fixtures will have or be associated with one or more sensors, such as occupancy sensors, ambient light sensors, and the like. Within the lighting network or the various lighting zones, lighting fixtures may share sensor data. Each lighting fixture may process sensor data provided by its own sensor, a remote standalone sensor, or lighting fixture, and process the sensor data according to the lighting fixture's own internal logic to control operation. The lighting fixtures may also receive control input from other lighting fixtures, control nodes, light switches, and commissioning tools. The control input may be processed along with the sensor data according to the internal logic to further enhance control of the lighting fixture.

### SUMMARY

It is an object of the present invention to provide a lighting control network and a node of such lighting control network that enable sharing of status information with an entity external to the lighting control network in a manner that does not compromise integrity of the lighting control network while allows for flexible interoperation with the element external to the lighting control network.

According to an example embodiment, a control apparatus for a node of a first network that is arranged to communicatively couple, to each other, a plurality of nodes, wherein said plurality of nodes comprise a plurality of luminaires arranged for illuminating one or more spaces is provided, the apparatus comprising: a communication portion for communicating with other apparatuses via the first network and a second network; and a control portion arranged to: derive, based on one or more occupancy states that are associated with the node, a node occupancy state that pertains to a location of the node within the one or more spaces and indicates one of occupancy or non-occupancy at the location of the node; receive, via the first network, one or more status indications originating from other ones of the plurality of nodes of the first network, wherein said status indications are indicative of respective occupancy states at respective locations of said other ones of the plurality of other nodes; derive, based on said one or more status indications, at least one regional occupancy state such that each regional occupancy state pertains to a respective plurality of other locations within the one or more spaces and indicates one of occupancy or non-occupancy at the respective plurality of other locations; and broadcast, via the second network to one or more external apparatuses that are external to the first network, a network occupancy status message that indicates the node occupancy state and the at least one regional occupancy state.

According to another example embodiment, a luminaire comprising a control apparatus according to the example embodiment described in the foregoing and at least one light source is provided, wherein the control portion comprises a lighting control portion further arranged to control one or more aspects of light output of the at least one light source.

According to another example embodiment, a method in a node of a first network that is arranged to communicatively couple, to each other, a plurality of nodes, wherein said plurality of nodes comprises a plurality of luminaires arranged for illuminating one or more spaces is provided, the method comprising: deriving, based on one or more occupancy states that are associated with the node, a node occupancy state that pertains to a location of the node within the one or more spaces and indicates one of occupancy or non-occupancy at the location of the node; receiving, via the first network, one or more status indications originating from other ones of the plurality of nodes of the first network, wherein said status indications are indicative of respective occupancy states at respective locations of said other ones of the plurality of other nodes; deriving, based on said one or more status indications, at least one regional occupancy state such that each regional occupancy state pertains to a respective plurality of other locations within the one or more spaces and indicates one of occupancy or non-occupancy at the respective plurality of other locations; and broadcasting, via a second network to one or more external apparatuses that are external to the first network, a network occupancy status message that indicates the node occupancy state and the at least one regional occupancy state.

According to another example embodiment, a computer program is provided, the computer program comprising computer readable program code configured to cause performing at least a method according to an example embodiment described in the foregoing when said program code is executed on a computing apparatus.

The computer program according to the above-described example embodiment may be embodied on a volatile or a non-volatile computer-readable record medium, for example as a computer program product comprising at least one computer readable non-transitory medium having the program code stored thereon, which, when executed by one or more computing apparatuses, causes the computing apparatuses at least to perform the method according to the example embodiment described in the foregoing. The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some logical components of a lighting system according to an example;
Figure 2 illustrates a block diagram of some components of a luminaire according to an example;
Figure 3 illustrates a block diagram of some logical components of a lighting system according to an example;
Figure 4 illustrates a block diagram of some components of a sensor unit according to an example;
Figure 5 illustrates a method according to an example; and
Figure 6 illustrates a block diagram of some components of an apparatus according to an example.

### DESCRIPTION OF SOME EMBODIMENTS

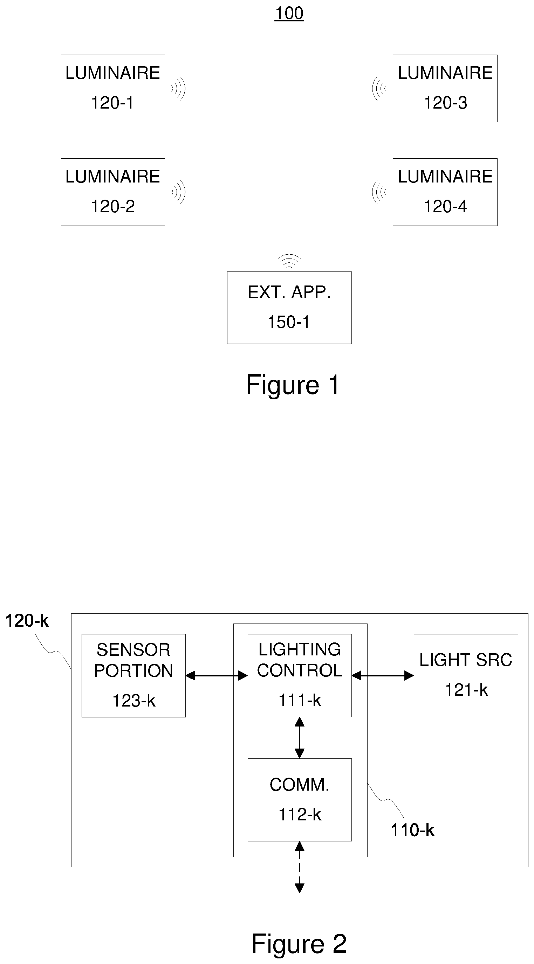

Figure 1 illustrates a block diagram of some components of a lighting system 100 according to an example. The lighting system 100 may be arranged for illuminating one or more spaces, e.g. one or more indoor spaces and/or one or more outdoor spaces. The lighting system 100 as illustrated in Figure 1 includes luminaires 120-1, 120-2, 120-3 and 120-4 and an external apparatus 150-1. The luminaires 120-1 to 120-3 represent a plurality of luminaires 120, where an individual luminaire may be referred to via a reference number 120-k. Each luminaire 120-k may be arranged at a respective location within the one or more spaces for illuminating the respective location of the one or more spaces. The external apparatus 150-1 represents one or more external apparatuses 150, where an individual external apparatus may be referred to via a reference number 150-j. The external apparatuses 150-j comprise respective elements of another device, system, service or function available in said one or more spaces, e.g. those of an HVAC system, an alarm system, an elevator system, etc.

The luminaires 120-k may be communicatively coupled to each other via a first network, which may be also referred to as a lighting control network. Hence, each luminaire 120-k may be considered as a respective node of the first network, which serves to interconnect the luminaires 120-k as the lighting control network. While the illustration of Figure 1 suggests wireless communication between the luminaires 120-k, the first network may comprise a wireless communication network, a wired communication network or bus, or a combination of a wireless communication network and a wired communication network or bus.

At least one of the luminaires 120-k may be further communicatively coupled to at least one of the one or more external apparatuses via a second network that is separate from the first network. The second network may comprise a wireless communication network and it may be also referred to as an external network. Hence, there may be a communicative coupling between an individual node of the first network and an external apparatus 150-j, while this coupling is separate from the first network and it does not render the respective external apparatus 150-j as a node of the first network.

Figure 2 illustrates a block diagram of some components of the luminaire 120-k according to an example. The luminaire 120-k may comprise at least one light sources 121-k and a lighting control apparatus 110-k that comprises a lighting control portion 111-k for controlling at least some aspects of the light output of the at least one light source 121-k and a communication portion 112-k for wireless and/or wired communication with other apparatuses. The luminaire 120-k may further comprise a sensor portion 123-k that includes one or more sensors for observing respective environmental characteristics at the location of the luminaire 120-k, e.g. in the location of the one or more spaces the luminaire 120-k serves to illuminate. The sensor portion 123-k comprises at least an occupancy sensor for monitoring occupancy at the location of the luminaire 120-k and it may comprise one or more further sensors, e.g. a light sensor for monitoring ambient light level at the location of the luminaire 120-k. As a non-limiting example, the occupancy sensor may comprise a motion sensor such as passive infrared (PIR) sensor, whereas in other examples of the occupancy sensor may comprise a microwave radar, a (digital) camera, a thermographic camera, a microphone, a lidar, etc. whereas the light sensor, if included in the sensor portion 123-k, may comprise a photodetector such as a photodiode.

The luminaire 120-k or an element thereof may have a luminaire identifier (ID) or a device ID assigned thereto, e.g. an address, a serial number, a name, etc. assigned to the luminaire 120-k or to an element thereof. The luminaire ID may be stored, for example, in a memory provided in the lighting control apparatus 110-k or in another component of the luminaire 120-k. The luminaire ID assigned to the luminaire 120-k may be applied in communication with other nodes of the lighting control network, as described in the following.

The luminaire 120-k may be assigned to a luminaire group with one or more other ones of the plurality of luminaires 120. Luminaires assigned to the same luminaire group are, typically but not necessarily, installed in locations that are relatively close to each other and they may hence serve to illuminate the same portion or respective adjacent portions of the one or more spaces. In terms of lighting control, at least one aspect of operation of those luminaires 120-k that are assigned to the same luminaire group may be dependent on a lighting control action carried out by another luminaire of the same luminaire group. Moreover, an external control entity that may be coupled to the lighting control network may address and/or control the luminaires 120-k of the same group via a single lighting control action or configuration action.

A luminaire group may be identified by a luminaire group ID assigned thereto. The luminaire group ID may be stored, for example, in the memory provided in the lighting control apparatus 110-k or in another component of the luminaire 120-k. The luminaire group ID assigned to the luminaire 120-k may be applied in communication with other nodes of the lighting control network, as described in the following. Alternatively or additionally, the luminaire 120-k may a have respective luminaire IDs of the other ones of the plurality of luminaires 120 that are assigned in the same luminaire group with the luminaire 120-k stored in the memory therein, thereby enabling identification of other luminaires of the same luminaire group based on their luminaire IDs. The information about the luminaire group in which the luminaire 120-k belongs to (e.g. the luminaire group ID and/or the respective luminaire IDs of the other luminaires of the luminaire group) may be set or defined e.g. upon installing, configuring or reconfiguring the lighting control apparatus 110-k and/or the luminaire 120-k, or this information may be received at the lighting control apparatus 110-k, e.g. from an external control entity, in the course of operation of the luminaire 120-k.

According to an example, the at least one light source 121-k comprises one or more light emitting diodes (LEDs) and the lighting control apparatus 110-k comprises or is provided as a LED driver device, whereas in another non-limiting example the at least one light source 121-k comprises one or more fluorescent lamps and the lighting control apparatus 110-k comprises or is provided as an electronic ballast.

The lighting control portion 111-k may be arranged to control one or more aspects of light output of the at least one light source 121-k in accordance with a predefined lighting control logic that defines one or more lighting control rules. Each lighting control rule may define a respective pair of a triggering condition and a lighting control action to be carried out in response to an occurrence of the triggering condition. A lighting control rule may optionally have one or more lighting control parameters associated therewith. As an example, a lighting control rule may define a triggering condition that directly or indirectly pertains to one or more sensor signals obtained from the sensor portion 123-k provided locally at the luminaire 120-k, e.g. an occupancy sensor signal and/or a light sensor signal. In the course of its operation, the lighting control portion 111-k may capture or derive local occupancy state indications (i.e. respective indications of one of occupancy or non-occupancy) based on the occupancy sensor signal received from the occupancy sensor of the sensor portion 123-k and/or derive local light level indications based on the light sensor signal received from the light sensor of the sensor portion 123-k. Herein, the local occupancy state may be considered as an occupancy state that is (directly) associated with the luminaire 120-k.

In the following, lighting control actions arising from application of the lighting control logic are predominantly described as operations carried out by the lighting control portion 112-k. As an example, the lighting control logic may define one or more of the following lighting control rules:
- a lighting control rule that defines switching on the light output of the luminaire 120-k at a target light intensity *I_{tgt,k}* or otherwise adjusting the light output of the luminaire 120-k from a lower light intensity to the target light intensity *I_{tgt,k}* as a response to a change of the local occupancy state from non-occupancy to occupancy;
- a lighting control rule that defines adjusting the light output of the luminaire 120-k to a stand-by light intensity *I_{off,k}* as a response to a change of occupancy state from occupancy to non-occupancy followed by a switch-off delay period *T_{off,k}* without a change of the local occupancy state from non-occupancy to occupancy;
- a lighting control rule that defines adjusting the light output of the luminaire 120-k to an intermediate light intensity *I_{dim,k}* where (*I_{off,k} < I_{dim,k} < I_{tgt,k}*) as a response to a change of occupancy state from occupancy to non-occupancy followed by a dim-down delay period *T_{off,k}* where (*T_{dim,k} < T_{off,k}*) without a change of the local occupancy state from non-occupancy to occupancy.

Moreover, in case the occupancy state remains unchanged, the lighting control logic may comprise respective lighting control rules for keeping the light output of the luminaire 120-k unchanged in response to continued occupancy and/or in response to continued non-occupancy.

The target light intensity *I_{tgt,k},* the intermediate light intensity *I_{int,k}* and the stand-by light intensity *I_{off,k}* as well as the switch-off delay period *T_{off,k},* the dim-down delay period *T_{dim,k}* described above serve as non-limiting examples of lighting control parameters that may be defined for the lighting control rules of the lighting control logic and they may have respective values set upon manufacturing, configuring or reconfiguring the lighting control apparatus 110-k and/or the luminaire 120-k.

As described in the foregoing, the communication portion 112-k may enable wired or wireless communication between the lighting control apparatus 110-k and other apparatuses via the lighting control network (the first network) and/or via the external network (the second network). In this regard, the communication portion 112-k may comprise one or more communication apparatuses that enable communication via the lighting control network and/or via the external network. In an example, the communication portion 112-k may comprise a single communication apparatus that enables wireless communication via the lighting control network and via the external network. In another example, the communication portion 112-k may comprise a first communication apparatus that enables wireless or wired communication via the lighting control network and a second communication apparatus that enables wireless communication via the external network.

A communication apparatus of the communication portion 112-k that enables wireless communication may comprise a wireless transceiver that is capable of communicating with wireless transceivers provided in other apparatuses using a wireless communication technique or protocol. The wireless communication may be provided by using a suitable short-range wireless communication technique known in the art that enables communication over ranges from a few meters up to a few hundred meters. Examples of suitable short-range wireless communication techniques include Bluetooth, Bluetooth Low-Energy (BLE), ZigBee, WLAN/Wi-Fi according to an IEEE 802.11 family of standards, etc. The choice of the wireless communication technique and network topology applied for a specific implementation of the lighting control network and/or the external network may depend e.g. on the required communication range and/or requirements with respect to energy-efficiency of the communication apparatuses.

In the following examples, some aspects of operation of the luminaire 120-k and its components are described with assuming application of a wireless communication technology for providing the lighting control network that serves to communicatively couple the plurality of luminaires 120 to each other, whereas an example that describes some aspects that may be specific to using wired communication to provide the lighting control network are provided later in this text. As a concrete non-limiting example of applicable wireless communication technology, the lighting control network may be provided using a wireless mesh network model, for example on a mesh network according to the Bluetooth or BLE Mesh networking protocol known in the art, whereas the external network may be provided using BLE communication independently of the lighting control network, e.g. via usage of BLE advertising channel protocol data units (PDUs). Without losing generality, in the following examples the BLE mesh and the BLE advertising channel PDUs are applied as respective examples of the lighting control network and the external network, where applicable.

The lighting control portion 111-k may operate the communication portion 112-k to transmit, via the lighting control network, status indication messages to the other nodes of the lighting control network. A status indication message may comprise a header part including information defined and/or required by the applied communication protocol and a payload part comprising one or more status indications that are descriptive of current (or recent) operating characteristic of the luminaire 120-k and/or the lighting control apparatus 110-k transmitting the status indication message. Conversely, the lighting control apparatus 110-k receives, via the lighting control network, status indication messages (and hence status indications) from other ones of the plurality of luminaires 120 and from possible other nodes of the lighting control network. A status indication transmitted from the lighting control apparatus 110-k may comprise, for example, one of the following:
- an action indication that identifies a lighting control action taken by the lighting control portion 111-k, e.g. switching on the light output of the luminaire 120-k (e.g. at the target light intensity *I_{tgt,k}*), adjusting the light output of the luminaire 120-k to the intermediate light intensity *I_{dim,k}*, or adjusting the light output of the luminaire 120-k to the stand-by light intensity *I_{off,k},* keeping the light output of the luminaire 120-k unchanged (e.g. at the target light intensity *I_{tgt,k}* or at the stand-by light intensity *I_{off,k}*);
- a sensor indication that comprises the current (or the most recent) sensor indication derived on basis of a sensor signal received from a respective sensor of the sensor portion 123-k in the lighting control portion 111-k, e.g. the current (or the most recent) local occupancy state indication derived on basis of the occupancy sensor signal received from the sensor portion 123-k or the current (or the most recent) local light level indication derived on basis of the light sensor signal received from the sensor portion 123-k.

A status indication message may comprise timing information that indicates the capturing time(s) of the status indication(s) included in the status indication message, e.g. one or more timestamps that indicate the time with respect to a predefined reference time, included in the payload part of the status indication message. A status indication message may further comprise the device ID assigned to the lighting control apparatus 110-k (or to the luminaire 120-k) that has transmitted the status indication message, in other words an identification of the luminaire 120-k to which the status indication(s) conveyed in the status indication message pertain. The device ID may be provided, for example, as part of the header part of the status indication message or it may be included in the payload part of the status indication message. Additionally, if the luminaire 120-k is assigned to a luminaire group, the payload part of a status indication message transmitted from the luminaire 120-k may comprise the luminaire group ID of the luminaire group to which the luminaire 120-k is assigned.

The status indications received in the status messages may serve as basis for one or more further lighting control rules for the lighting control portion 111-k. An example in this regard comprises a lighting control rule that defines switching on the light output of the luminaire 120-k at the target light intensity *I_{tgt,k}* or otherwise adjusting the light output of the luminaire 120-k from a lower light intensity to the target light intensity *I_{tgt,k}* as a response to another luminaire in the same luminaire group indicating a change of the occupancy state therein from non-occupancy to occupancy. The lighting control portion 111-k may derive an occupancy state pertaining to another luminaire of the same luminaire group e.g. via the one or more of the following events:
- receiving an action indication that indicates another luminaire of the same luminaire group switching on its light output;
- receiving a sensor indication that comprises an occupancy state indication derived at another luminaire of the same luminaire group, where the received occupancy state suggest a change from non-occupancy to occupancy at the respective other luminaire.

Along similar lines, the lighting control logic at the lighting control portion 111-k may include one or more lighting control rules that are responsive to a change of the occupancy state from occupancy to non-occupancy in one or more other luminaires that are assigned to the same luminaire group with the luminaire 120-k. An example in this regard comprises a lighting control rule that defines adjusting the light output of the luminaire 120-k to the stand-by light intensity *I_{off,k}* as a response to none of the luminaires of the same luminaire group with the luminaire 120-k having indicated occupancy within a predefined time period. The lighting control portion 111-k may derive an occupancy state pertaining to another luminaire in the same luminaire group e.g. via the one or more of the following events:
- receiving, from those ones of the other luminaires of the same luminaire group for which the most recent action indication indicates the respective luminaire having switched or kept on its light output, a respective action indication that indicates the respective luminaire adjusting its light output to the stand-by light intensity *I_{off,k}*;
- failing to receive, during the predefined time period, an respective action indication that indicates the respective luminaire switching or keeping on its light output from any of the other luminaires of the same luminaire group;
- receiving, from all other luminaires of the same luminaire group, a respective sensor indication that indicates an occupancy state indication derived at respective luminaire of the same luminaire group, where the received occupancy state indications suggests a change from occupancy to non-occupancy at the respective other luminaire.

Hence, in the above scenario the lighting control in the lighting control portion 111-k partially relies on respective occupancy states in one or more other luminaires that are assigned to the same luminaire group with the luminaire 120-k, which occupancy states may be considered as respective occupancy states that are (indirectly) associated with the luminaire 120-k.

In another example, instead of considering the occupancy states derived for the other luminaires in a separate lighting control rule, a similar functionality may be provided via replacing the local occupancy state derived at the lighting control portion 111-k based on the occupancy sensor signal received from the sensor portion 123-k by a group occupancy state in application of the above-described lighting control rules that rely on the local occupancy state. The group occupancy state may be derived based on all occupancy states that are associated with the luminaire 120-k, i.e. on the local occupancy state derived on basis of the occupancy sensor signal received from the sensor portion 123-k and on the respective occupancy states derived for the other luminaires in the same luminaire group, e.g. such that the group occupancy state may be set to indicate occupancy in case any of the luminaires assigned to the group indicates occupancy and set to indicate non-occupancy in case none of the luminaires assigned to the group indicates occupancy. In this regard, determination of the group occupancy state may consider, for each of the luminaires involved, the respective most recently derived occupancy state.

Since reception of the status messages at the lighting control apparatus 110-k is not restricted to status messages originating from those ones of the plurality of luminaires 120 that are assigned to the same luminaire group with the luminaire 120-k but the lighting control apparatus 110-k basically may derive occupancy indications pertaining to any of the other luminaires of the lighting system 100 e.g. via one or more of the following events:
- receiving an action indication that indicates another one of the plurality of luminaires 120 switching on its light output (suggesting a change of occupancy state from non-occupancy to occupancy therein);
- receiving an action indication that indicates another one of the plurality of luminaires 120 adjusting its light output to the stand-by light intensity *I_{off,k}* (suggesting a change of occupancy state from occupancy to non-occupancy therein);
- receiving a sensor indication that comprises an occupancy state indication derived at another one of the plurality of luminaires 120 (directly indicating the occupancy state therein).

Consequently, in the course of operation of the lighting system 100 the lighting control portion 111-k may obtain knowledge of respective occupancy states pertaining to respective ones of the plurality of luminaires 120. In this regard, respective status messages originating from other ones of the plurality luminaires 120 received at the lighting control apparatus 110-k serve to provide respective indications of occupancy states derived at their respective locations within the one or more spaces the lighting system 100 serves to illuminate. In particular, status messages originating from a lighting control apparatus 110-n of a luminaire 120-n serve to provide respective
indications of occupancy states derived at its location within the one or more spaces. In viewpoint of the lighting control apparatus 110-k and the lighting control portion 111-k therein, the (local) occupancy state derived at the lighting control apparatus 110-n may be considered as a remote occupancy state pertaining to the location of the luminaire 120-n.

Consequently, in the course of operation of the lighting system 100 the lighting control portion 111-k continually obtains the following knowledge of occupancy states in various locations within the one or more spaces the lighting system 100 serves to illuminate:
- a local occupancy state that pertains to the location of the luminaire 120-k,
- respective one or more remote occupancy states that pertain to respective locations other than the location of the luminaire 120-k.

In addition to or instead of making use of the knowledge of the occupancy states in other luminaires of the same luminaire group with the luminaire 120-k for lighting control at the lighting control portion 111-k, the occupancy states pertaining to the other one of the plurality of luminaries 120 may serve as basis for controlling operations and procedures of different kind, for example, in the lighting control apparatus 110-k and/or in the one or more external apparatuses 150. As an example in this regard, the lighting control portion 111-k shares at least part of the occupancy information available therein with the one or more external apparatuses 150 e.g. by operating the communication portion 112-k to broadcast, via the external network, network occupancy status messages that indicate a node occupancy state that pertains to the location of the luminaire 120-k and at least one regional occupancy state that pertains to one or more further locations within the one or more spaces the plurality of luminaires 120 serves to illuminate, where the one or more further locations may include respective locations of one or more other ones of the plurality of luminaires 120. Typically, but not necessarily, the one or more further locations exclude the location of the luminaire 120-k and are hence locations other than the location of the luminaire 120-k. Non-limiting examples of derivation of the node occupancy state and the at least one regional occupancy state based on occupancy information acquired at the lighting control portion 111-k are provided in the following. The network occupancy status message provides its recipient with information concerning occupancy within the one or more spaces at two or more levels, e.g. at the location of the luminaire 120-k and within a wider area that (also) includes one or more locations further away from the luminaire 120-k, thereby enabling the recipient of the network occupancy status message that is located in proximity of the luminaire 120-k to adjust or adapt its operation by taking into account presence of one or more persons in its both in its immediate vicinity and further away within the one or more spaces.

In an example, the node occupancy state may include the most recent local occupancy state derived at the lighting control portion 111-k, whereas in another example the node occupancy state may include the group occupancy state described in the foregoing, e.g. one derived in the lighting control portion 111-k based on the most recently derived local occupancy state and further based on the respective remote occupancy states derived for the other luminaires in the same luminaire group.

In a further example, the node occupancy state may include a proximity occupancy state derived in the lighting control portion 111-k in consideration of proximity of the other ones of the plurality of luminaries 120. In this regard, the lighting control portion 111-k may estimate a distance between the luminaire 120-k and another one of the plurality of luminaires 120 based on one or more characteristics of status messages received therefrom. The following examples in this regard refer to distance estimation between the luminaire 120-k and the luminaire 120-n, while these examples readily generalize into distance estimation between the luminaire 120-k and any other one of the plurality of luminaires 120.

In case the lighting control network is a wireless one that relies on a wireless mesh network model such as a BLE Mesh, a status message originating from the luminaire 120-n may be received via one or more intermediate nodes and the status message (or a lower-layer message that carries the status message) may comprise an indication of hop count that indicates the number of hops (i.e. the number of intermediate nodes of the wireless mesh network) between the lighting control apparatuses 110-k and 110-n. Hence, the hop count received in a status message may serve as an indication of the distance between the lighting control apparatuses 110-k and 110-n (and hence between the luminaires 120-k and 120-n). Consequently, the lighting control portion 111-k may estimate the distance between the luminaires 120-k and 120-n based on respective hop counts received in one or more status messages originating from the lighting control apparatus 110-n, e.g. such that the distance is estimated via a hop count value derived as the hop count indicated in a most recently received status message that originates from the lighting control apparatus 110-n or derived based on the respective hop counts indicated in a plurality of status messages originating from the lighting control apparatus 110-n (e.g. as an average or as a median of the respective hop counts indicated in status messages received therefrom over a time period), where increasing hop count value indicates increasing distance from the luminaire 120-k to the luminaire 120-n.

In case the wireless message carrying the status message originating from the lighting control apparatus 110-n is received at the lighting control apparatus 110-k directly from the lighting control device 110-n (i.e. without intermediate nodes), the lighting control portion 111-k may derive a received signal strength indication (RSSI) pertaining to the received status message. Since in this scenario the RSSI derived at the lighting control apparatus 110-k at least in part reflects the distance to the lighting control apparatus 110-n, the RSSI may serve as an indication of the distance between the lighting control devices 110-k and 110-n (and hence between the luminaires 120-k and 120-n). Consequently, the distance between the luminaires 120-k and 120-n may be estimated based on respective RSSIs derived for one or more status messages received at the lighting control apparatus 110-k (directly) from the lighting control apparatus 110-n, e.g. such that the distance is estimated via a RSSI value derived as the RSSI derived for a status message most recently received from the lighting control apparatus 110-n or derived based on the respective RSSIs derived for a plurality of status messages received from the lighting control apparatus 110-n (e.g. as an average or as a median of the respective RSSIs derived for status messages received therefrom over a time period), where decreasing RSSI value indicates increasing distance from the luminaire 120-k to the luminaire 120-n.

The proximity occupancy state may be derived based on respective remote occupancy states of those ones of the other luminaires that are within a predefined distance threshold from the luminaire 120-k, e.g. such that the proximity occupancy state may be set to indicate occupancy in case any of the luminaires within the distance threshold indicates occupancy and set to indicate non-occupancy in case none of the luminaires within the distance threshold indicates occupancy. The remote occupancy state derived for the other luminaires found to be within the distance threshold from the luminaire 120-k may be considered as respective occupancy states that are (indirectly) associated with the luminaire 120. Determination of the proximity occupancy state may consider, for each of the luminaires involved, the respective most recently derived remote occupancy state. The distance measure applied in identifying the other luminaires to be considered in derivation of the proximity occupancy state may comprise the hop count value and/or the RSSI value described above, e.g. such that only those luminaires for which the hop count value is smaller than a predefined hop count threshold (e.g. one or two) and/or for which the RSSI value is larger than a predefined RSSI threshold are considered in derivation of the proximity occupancy state. Along the lines described above, the hop count value and/or the RSSI value pertaining to a given other luminaire may be derived as the hop count and/or the RSSI derived for the most recent status message originating from the respective other luminaire or e.g. as an average or median of the hop counts and/or RSSIs derived based on status messages received from the respective other luminaire over a time periods, whereas the hop count threshold and/or RSSI threshold may be set accordingly.

Regardless of the manner of deriving the node occupancy state for the network occupancy status message, according to an example, the at least one regional occupancy state may comprise a network occupancy state that may be derived in the lighting control portion 111-k based on respective remote occupancy states derived for other ones of the plurality of the luminaires 120. As an example, the network occupancy state may be set to indicate occupancy in case any of the other ones of the plurality of luminaires 120 indicates occupancy and set to indicate non-occupancy in case none of the other ones the plurality of luminaires 120 indicates occupancy. In this regard, determination of the network occupancy state may consider, for each of the luminaires involved, the respective most recently derived occupancy state.

In other words, derivation of the network occupancy state may consider the plurality of luminaires 120 apart from the luminaires considered in derivation of the node occupancy for the same network occupancy status message and, hence, depending on the case, the derivation of the network occupancy state may disregard the local occupancy state derived in the luminaire 120-k, the remote occupancy states derived for the other luminaires in the same luminaire group with the luminaire 120-k and/or the other luminaires that are within the predefined distance from the luminaire 120-k.

In another example, derivation of the at least one regional occupancy state in the lighting control portion 111-k may consider proximity of the other ones of the plurality of luminaries 120 e.g. via application of one or more predefined non-overlapping distance ranges for assigning the other luminaires into respective proximity groups based on their distance from the luminaire 120-k and via deriving a respective proximity group occupancy state for each proximity group. Also in this example the distances between the luminaire 120-k and other ones of the plurality of luminaires 120 may be defined as the number of hops and/or as the RSSI and the distance thresholds may be defined as respective hop count thresholds and/or RSSI thresholds.

Hence, each proximity group includes those ones of the other luminaires that are within a respective distance range from the luminaire 120-k and the respective proximity group occupancy state may be derived based on respective remote occupancy states derived for those ones of the other luminaires that are included in the respective proximity group. In this regard, the respective proximity group occupancy state may be set to indicate occupancy in case any of the luminaires included in the respective proximity group indicates occupancy and set to indicate non-occupancy in case none of the luminaires that are included in the respective proximity group indicates occupancy, where the determination of the respective proximity group occupancy state may consider, for each of the luminaires involved, the respective most recently derived remote occupancy state.

As in the case of derivation of the network occupancy state, also derivation of the one or more proximity group occupancy states may consider the plurality of luminaires 120 apart from the luminaires considered in derivation of the node occupancy for the same network occupancy status message and, hence, depending on the case, the derivation of the one or more proximity group occupancy states may disregard the local occupancy state derived in the luminaire 120-k, the remote occupancy states derived for the other luminaires in the same luminaire group with the luminaire 120-k and/or the other luminaires that are within the predefined distance from the luminaire 120-k.

In a further example, the at least one regional occupancy state may comprise one or more spatial group occupancy states derived in dependence of predefined location information assigned to at least some of the plurality of luminaires 120. As an example in this regard, there may be one or more spatial luminaire groups defined in relation to the location of the luminaire 120-k and the lighting control portion 111-k may derive a respective spatial group occupancy state for each of the spatial groups. As a non-limiting example, the spatial groups may comprise one or more of the following:
- other ones of the plurality of luminaires 120 that are in the same space (e.g. in the same room) with the luminaire 120-k,
- other ones of the plurality of luminaires 120 that are in the same floor (in the same building) with the luminaire 120-k,
- other ones of the plurality of luminaires 120 that are in the same building with the luminaire 120-k.

This information may be stored, for example, in the memory provided in the lighting control apparatus 110-kor in another component of the luminaire 120-k and it may be set or defined, for example, upon installing, configuring or reconfiguring the lighting control apparatus 110-k and/or the luminaire 120-k. In another example, this information may be received in the course of operation of the luminaire 120-k via the lighting control network, e.g. from an external control entity or from the luminaires concerned (e.g. as part of the status messages originating therefrom or in response to an information request sent thereto from the lighting control apparatus 110-k).

With access to information that defines the one or more spatial groups, the lighting control portion 111-k may derive the respective spatial group occupancy state for one or more of the spatial groups based on the respective remote occupancy states derived for the luminaires concerned. In this regard, the respective spatial group occupancy state may be set to indicate occupancy in case any of the luminaires included in the respective spatial group indicates occupancy and set to indicate non-occupancy in case none of the luminaires that are included in the respective spatial group indicates occupancy, where the determination of the respective proximity group occupancy state may consider, for each of the luminaires involved, the respective most recently derived remote occupancy state.

In addition to the non-limiting examples of deriving the node occupancy state and the at least one regional occupancy state for the network occupancy status message provided in the foregoing, in other examples various (other) the network occupancy status message include a different combination of one or more of the local occupancy state, the group occupancy state, the proximity occupancy state, the network occupancy state, the one or more proximity group occupancy states and the one or more spatial group occupancy states. As an example in this regard, the node occupancy state may comprise the local occupancy state while the at least one regional occupancy state may comprise the group occupancy state or both the group occupancy state and the network occupancy state. In another example, the node occupancy state may comprise the local occupancy state while the at least one regional occupancy state may comprise the proximity occupancy state or both the proximity occupancy state and the network occupancy state. In a further example, the node occupancy state may comprise one of the local occupancy state, the group occupancy state or the proximity occupancy state while the at least one regional occupancy state may comprise at least one of the following: the network occupancy state, the one or more proximity group occupancy states and the one or more spatial group occupancy states.

In case the sensor portion 123-k includes the light sensor, the network occupancy status message may further include a node light level indication that is descriptive of the ambient light level at the location of the luminaire 120-k. In an example the node light level indication may comprise the current (or the most recent) local light level indication derived in the lighting control portion 111-k or a value derived therefrom. As an example of the latter, the node light level indication may include a binary flag that indicates whether the local light level currently exceeds a predefined light level threshold, e.g. such that the binary flag is set to value one in case the local light level exceeds the light level threshold and set to value zero in case the local light level fails to exceed the light level threshold.

As described in the foregoing, the lighting control portion 111-k may share at least part of the occupancy information available therein with the one or more external apparatuses 150 e.g. via broadcasting the network occupancy status message via the external network. Usage of the external network (instead of the lighting control network) for this purpose ensures that network occupancy status messages do not interfere with delivery of lighting control information (e.g. the status messages) via the lighting control network, thereby facilitating reliable and timely lighting control over the lighting control network. As further described in the foregoing, the external network may be provided using e.g. BLE communication and, consequently, the network occupancy status message may be broadcast in one or more PDUs according to the BLE protocol. In an example, such communication may rely on BLE advertising channel PDUs, which may be also referred to as BLE advertising packets, BLE advertisements or BLE adverts. In this regard, the network occupancy status message may be broadcast in a respective user-definable data field of one or more BLE advertising packets. The employed BLE advertising packets may comprise, for example, connectable undirected advertising (ADV_IND) packets, non-connectable undirected advertising (ADV_NONCONN_IND) packets and/or scannable undirected advertising (ADV_SCAN_IND) packets and the network occupancy status message may be included e.g. in the Complete Local Name field and/or in a Manufacturer Specific Data section of a BLE advertising packet.

The lighting control portion 111-k may compose and broadcast a network occupancy status message according to a predefined schedule, e.g. at predefined time intervals. A suitable schedule may depend, for example, on the roles and purpose of the external apparatuses 150-j. In various examples in this regard, the predefined schedule may define continually broadcasting network occupancy status messages using a time interval selected from a range from a few seconds to a few hours, e.g. 10 seconds, 10 minutes or 30 minutes. In further examples, alternatively or additionally, the lighting control portion 111-k may compose and broadcast a network occupancy status message at predefined times of the day and/or at predefined days of the week, in response to a request from the external apparatus 150-j, and/or in response to having derived a respective predefined number of local occupancy indications and/or remote occupancy indications since broadcasting the most recent previous network occupancy status message.

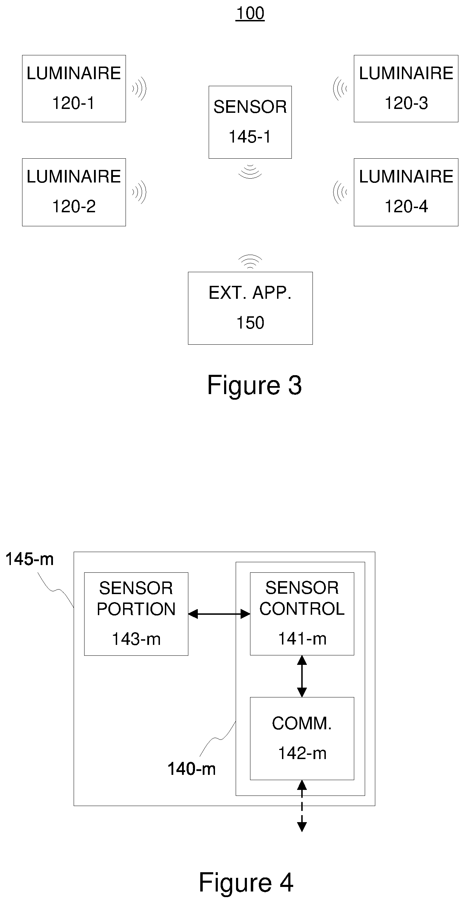

Figure 3 illustrates a block diagram of some components of a lighting system 100 according to another example. In this example, the lighting system 100 is similar to that illustrated in the example of Figure 1 while it further comprises a sensor unit 145-1, which represents one or more sensor units 145, where an individual sensor unit may be referred to via a reference number 145-m. Each sensor unit 145-m may be arranged to monitor one or more environmental characteristics in a respective location of the one or more spaces. Figure 4 illustrates a block diagram of some components of the sensor unit 145-m according to an example. The sensor unit 145-m may comprise a sensor portion 143-m that includes one or more sensors for observing respective environmental characteristics at the location of the sensor unit 145-m and a sensor control apparatus 140-m that comprises a sensor control portion 141-m for controlling at least some aspects of operation of the sensor unit 145-m and a communication portion 142-m for wireless and/or wired communication with other apparatuses. The sensor units 145-m may be communicatively coupled to each other and to the plurality of luminaires 120 via the lighting control network and, hence, each sensor unit 145-m may be considered as a respective node of the lighting control network.

The communication portion 142-m may be similar to the communication portion 122-k described in the foregoing and the sensor portion 143-m may be similar to the sensor portion 123-k described in the foregoing, *mutatis mutandis*. Moreover, operation of the sensor control portion 141-m in terms of its relationship and interoperation with the sensor portion 143-m and the communication portion 142-m is similar to that described in the foregoing for the lighting control portion 111-k, the sensor portion 123-k and the communication portion 112-k, *mutatis mutandis*. The sensor unit 145-m or an element thereof may have a sensor ID or a device ID assigned thereto, which may comprise e.g. an address, a serial number, a name, etc. assigned to the sensor unit 145-m or to an element thereof. The sensor unit 145-m may be assigned to a luminaire group that includes one or more of the luminaires 120-k and the sensor control portion 141-m may have the knowledge of the luminaire IDs of those luminaires assigned to the same luminaire group and, conversely, the luminaires 120-k of the luminaire group may have the knowledge of the sensor ID of the sensor unit 145-m assigned to the same luminaire group.

As described above for the communication portion 112-k, the communication portion 142-m may enable wired or wireless communication between the sensor control apparatus 140-m and other apparatuses via the lighting control network and/or via the external network. Moreover, along the lines described in the foregoing for the lighting control portion 111-k, the sensor control portion 141-m may operate the communication portion 142-m to transmit, via the lighting control network, status indication messages to other elements coupled to the lighting control network, e.g. to the plurality of luminaires 120. The status indication messages transmitted from the sensor control apparatus 140-m may have structure similar to that described in the foregoing in context of the lighting control apparatus 110-k and they may include one or more sensor indications derived in the sensor control portion 141-m on basis of a sensor signal received from a respective sensor of the sensor portion 143-m, e.g. the current (or the most recent) local occupancy state indication derived on basis of an occupancy sensor signal received from the sensor portion 143-m and/or the current (or the most recent) local light level indication derived on basis of a light sensor signal received from the sensor portion 143-k. Conversely, the lighting control apparatus 110-k may receive, via the lighting control network, status indication messages (and hence status indications) from the sensor unit 145-m and from other sensor units possible included as nodes of the lighting control network.

Consequently, the lighting control logic in the luminaire 120-k assigned to the same luminaire group with the sensor unit 145-m may carry out the lighting control therein further in consideration of respective status indications, e.g. occupancy indications, originating from the sensor unit 145-m. Moreover, (all) luminaires of the lighting system 100 may receive the status indications originating from the sensor unit 145-m, whereas the sensor control apparatus 145-m may receive the respective status indications from the plurality of luminaires 120 and from other ones of the one or more sensor units 145. Consequently, luminaire 120-k may further base the derivation of the network occupancy status message therein on respective occupancy indications derived from the one or more sensor units 145 possibly coupled to the lighting control network, whereas the sensor control portion 141-m of the sensor control apparatus 140-m may compose the network occupancy status message described in the foregoing and broadcast the network occupancy status message via the external network in a manner described in the foregoing for the lighting control apparatus 110-k of the luminaire 120-k, *mutatis mutandis*.

The examples described in the foregoing assume presence of the sensor portion 123-k and the occupancy sensor therein in the luminaire 120-k. In another example, the luminaire may be provided without the sensor portion 123-k or the sensor portion 123-k in the luminaire 120-k may not include the occupancy sensor. In such a scenario the lighting control rules described above that rely on the local occupancy state derived at the lighting control portion 111-k may be omitted and the lighting control in the lighting control therein may be carried out via the lighting control rules that rely on the respective remote occupancy states derived for one or more other luminaires that are assigned to the same luminaire group with the luminaire 120-k, which occupancy states may be considered as respective occupancy states that are (indirectly) associated with the luminaire 120-k. Alternatively, the lighting control in the lighting control portion 111-k may apply the local-occupancy-state-relying lighting control rules described above by using the group occupancy state derived therein (as described in the foregoing but without consideration of the local occupancy state) as the triggering condition instead of the local occupancy state (which in this example is not available in lighting control portion 111-k due to absence of the occupancy sensor in the luminaire 120-k).

In an example, the external apparatus 150-j may request specific types of occupancy state indications to be included in the network occupancy status message(s) originating from the node of the lighting control network, whereas the node of the lighting network may compose at least one subsequent network occupancy status message accordingly. As an example in this regard, the external apparatus 150-j may request any combination of one or more of the local occupancy state, the group occupancy state, the proximity occupancy state, the network occupancy state, the one or more proximity group occupancy states and the one or more spatial group occupancy states that is implicitly or explicitly described in the foregoing, depending on preferences and/or requirements of the underlying process or system.

As an example, the external apparatus 150-j may transmit, to the luminaire control apparatus 110-k or to the sensor control apparatus 140-k (as the case may be), a message that specifies the types of occupancy states the external apparatus 150-j wishes to receive therefrom and, consequently, the lighting control portion 111-k or the sensor control portion 141-m (as the case may be) may derive the node occupancy state and the at least one regional occupancy state accordingly. In this regard, the external apparatus 150-j may send such a message addressed to the luminaire control apparatus 110-k or to the sensor control apparatus 140-k via the external network, possibly making use of contact information received in the network occupancy status message received therefrom. As a non-limiting example in case the network occupancy status message is received in a BLE advertising packet such as an ADV_IND packet, an ADV_NONCONN_IND packet or an ADV_SCAN_IND packet, the request message may be likewise transmitted in a user-definable field of a BLE advertising packet, e.g. in the Complete Local Name field or the Manufacturer Specific Data section of an ADV_IND packet, an ADV_NONCONN_IND packet or an ADV_SCAN_IND packet.

Upon reception of a network occupancy status message, the external apparatus 150-j may adjust its operation or operation of a system it serves to control in dependence of the node occupancy state and the at least one regional occupancy state received in the network occupancy status message. In particular, the external apparatus 150-j may control the underlying process or system differently in dependence of the indicated node occupancy state and the at least one regional occupancy state:
- In case both the node occupancy state and the at least one regional occupancy state indicate non-occupancy, the external apparatus 150-j may apply a first setting;
- In case the node occupancy state indicates non-occupancy but the at least one regional occupancy state indicates occupancy, the external apparatus 150-j may apply a second setting;
- In case both the node occupancy state indicates occupancy, the external apparatus 150-j may apply a third setting.

As a concrete example in this regard, the external apparatus 150-j may comprise or may be coupled to a thermostat that is arranged to adjust local temperature in accordance with the node occupancy state and the network occupancy state included in the at least one regional occupancy state e.g. such that in case both the node occupancy state and the network occupancy state indicate non-occupancy, a low temperature (e.g. 19 degrees Celsius) is applied for energy conservation, in case the node occupancy state indicates non-occupancy but the network occupancy state indicates occupancy, a medium temperature (e.g. 20 degrees Celsius) is applied in order to prepare for presence of one or more persons, and in case the node occupancy indicates occupancy, a high temperature (e.g. 21.5 degrees Celsius) is applied for comfort.

In another example, the external apparatus 150-j may control one or more light fixtures that are not coupled to the lighting control network (e.g. spotlights, light fixtures provided for indirect lighting, decoration lights, etc.) in dependence of the node occupancy state and/or the at least one regional occupancy state (e.g. the network occupancy state), for example such that the one or more light fixtures are switched and/or kept on in response to the node occupancy state indicating occupancy or in response to at least one of the node occupancy state and the network occupancy state indicting occupancy while otherwise keeping the one or more light fixtures switched off or at stand-by light level.

In an example, the external apparatus 150-j may estimate proximity of the node of the lighting control network (e.g. the luminaire 120-k or the sensor unit 145-m) from which the network occupancy status message is received via deriving a RSSI for a plurality of messages received therefrom. In this regard, the external apparatus 150-j may compute a RSSI value derived based on the respective RSSIs derived for a plurality of messages received from the respective node (e.g. as an average or as a median of the respective RSSIs derived for messages received therefrom) and the external apparatus 150-j may ignore network occupancy status messages from the respective node in case the RSSI value fails to exceed a predefined RSSI threshold. In this regard, a RSSI value below the RSSI threshold may be considered to represent a node that is too far away from the external apparatus 150-j and/or serve as an indication of a node that is behind a wall or a corresponding.

In an example, the external apparatus 150-j may store, in a memory available therein, history data comprising respective histories of the node occupancy state and the at least one regional occupancy state and to analyze the history data in order to learn one or more patterns in the occupancy data. As an example in this regard, the analysis may aim at learning one or more of the following:
- an expected time delay between a change from non-occupancy to occupancy in the node occupancy state after a corresponding change from non-occupancy to occupancy in the network occupancy state,
- an expected time delay between a change from occupancy to non-occupancy in the node occupancy state after a corresponding change from occupancy to non-occupancy in the network occupancy state,
- an expected time delay between a change from non-occupancy to occupancy in the network occupancy state after a corresponding change from non-occupancy to occupancy in the node occupancy state,
- an expected time delay between a change from occupancy to non-occupancy in the network occupancy state after a corresponding change from occupancy to non-occupancy in the node occupancy state.

Consequently, the external apparatus 150-j may make use of an applicable expected time delay in controlling the underlying process or system in a manner that takes into account observed occupancy patterns within the one or more spaces. Non-limiting examples of such an approach include a thermostat adjusting the local temperature, an air-conditioning system adjusting its operation, a home or office appliance or a machine in a factory turning on or off in view of the expected change in occupancy state in vicinity of the node of the lighting control network serving as the source of the network occupancy status messages received at the external apparatus 150-j.

In a further example, in case the network occupancy status messages received at the external apparatus 150-j include the node light level indication described in the foregoing, the external apparatus 150-j may control the underlying process or system further in dependence of the received node light level indications. As an example in this regard, referring back to the example that involves the external apparatus 150-j controlling one or more light fixtures that are not coupled to the lighting control network, switching and/or keeping on the one or more light fixtures may be conditional to the light level indication e.g. such that they are switched and/or kept on only in case the node light level indication suggests light level that the exceed the light level threshold. In another example, the external apparatus 150-j may serve to control window blinds in accordance with the node occupancy status and/or the at least one regional occupancy state and further in view of the node light level indications.

While the examples concerning communication between the nodes of the lighting control network, e.g. between the plurality of luminaires 120 and/or the one or more sensor units 145 at least implicitly assume wireless communication between the nodes of the lighting control network, along the lines described above, the lighting control network may be provided using wired communication technology instead. As an example in this regard, a communication apparatus of the communication portion 112-k, 142-m that enables wired communication may comprise a network interface (or a bus interface) that is capable of communicating over a wired network or a wired bus using a predefined communication and/or control protocol, such as the Digital Addressable Lighting Interface (DALI) specified in a series of technical standards IEC 62386. The choice of the wired communication technique and network topology applied for a specific implementation of the lighting control network and/or the external network may depend e.g. on the required communication range and/or requirements with respect to energy-efficiency of the communication apparatuses.

In such a wired communication scenario the luminaires 120-k and the sensor units 145-m possibly coupled to the lighting control network may acquire knowledge of operational status of other nodes of the network via monitoring the communication carried out via the wired network or bus, in other words receiving control messages and/or status messages transmitted via the wired network or bus. In particular, in addition to the local occupancy state that may be derived in the lighting control portion 111-kof the luminaire 120-k based on the occupancy sensor signal received therein from the sensor portion 123-k provided therein, as an example, the lighting control portion 111-k may be able to acquire occupancy-related information of the following kind via monitoring or receiving messages conveyed via the wired network or bus:
- occupancy state indications addressed to a luminaire group in which the luminaire 120-k belongs to,
- occupancy state indications addressed to one or more other luminaire groups (i.e. ones in which the luminaire 120-k does not belong to),
- lighting control commands addressed to the luminaire 120-k or to a luminaire group in which the luminaire 120-k belongs to,
- lighting control commands addressed to other luminaires and/or other luminaire groups (i.e. ones in which the luminaire 120-k does not belong to).

Moreover, similar observations may be made in the sensor control portion 141-m of the sensor unit 145-m, *mutatis mutandis*. Consequently, the lighting control portion 111-k or the sensor control portion 141-m may derive the respective remote occupancy states along the lines described in the foregoing and, consequently, make use of the occupancy information available therein to compose and broadcast the network occupancy status message including the node occupancy state and the at least one regional occupancy state.

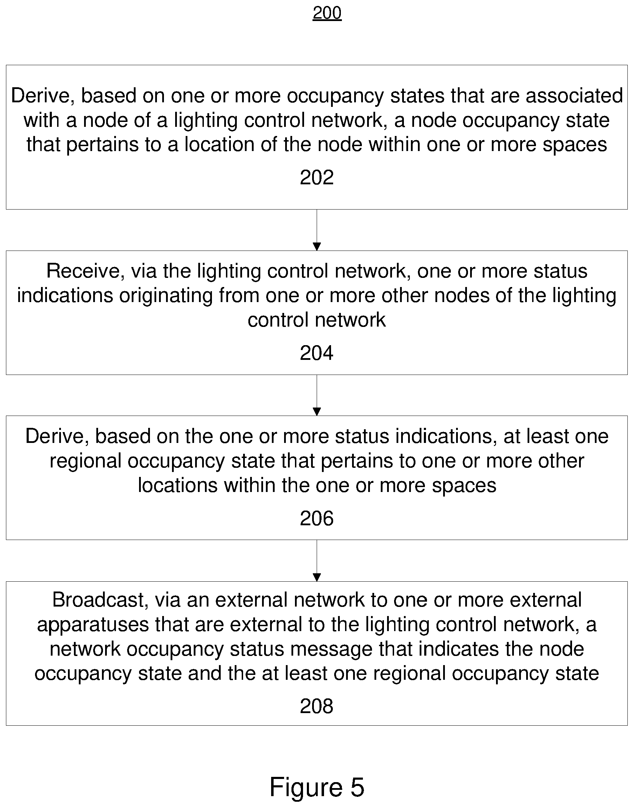

Some of the operations described in the foregoing with references to the lighting control portion 111-k or the sensor control portion 141-m may be also defined as steps of a method. As an example in this regard, Figure 5 depicts a flowchart that illustrates a method 200 carried out in the node of the lighting control network (e.g. in the luminaire 120-k or in the sensor unit 145-m), which lighting control network is arranged to communicatively couple, to each other, a plurality of nodes that include the plurality of luminaires 120 arranged for illuminating one or more spaces and that may further include the one or more sensor units 145. The respective operations described with references to blocks 202 to 208 pertaining to the method 200 may be varied or complemented in a number of ways, for example as described in the foregoing and/or in the following with references to the luminaire 120-k and/or to the sensor unit 145-m.

The method 200 comprises deriving, based on one or more occupancy states that are associated with the node, a node occupancy state that pertains to a location of the node within the one or more spaces, as indicated in block 202. The method 200 further comprises receiving, via the lighting control network, one or more status indications originating from one or more other ones of the plurality of nodes of the lighting control network, as indicated in block 204, and deriving, based on the one or more status indications, at least one regional occupancy state that pertains to one or more other locations within the one or more spaces, as indicated in block 206. The method 200 further comprises broadcasting, via the external network to the one or more external apparatuses 150 that are external to the lighting control network, a network occupancy status message that indicates the node occupancy state and the at least one regional occupancy state, as indicated in block 208.

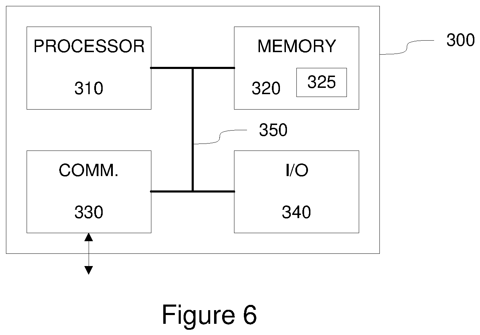

Figure 6 illustrates a block diagram of some components of an apparatus 300 that may be employed to implement at least some of the operations described with references to the lighting control apparatus 110-k or the sensor control apparatus 140-m. The apparatus 300 comprises a processor 310 and a memory 320. The memory 320 may store data and computer program code 325. The apparatus 300 may further comprise communication means 330 for wired or wireless communication with other apparatuses and/or user I/O (input/output) components 340 that may be arranged, together with the processor 310 and a portion of the computer program code 325, to provide the user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the lighting control apparatus 110-k or the sensor control apparatus 140-m. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the lighting control apparatus 110-k or the sensor control apparatus 140-m when loaded into the processor 310. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the lighting control apparatus 110-k or the sensor control apparatus 140-m. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the lighting control apparatus 110-k or the sensor control apparatus 140-m.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the lighting control apparatus 110-k or the sensor control apparatus 140-m. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

## Claims

1. A control apparatus (110-k, 140-m) for a node (120-k, 145-m) of a first network that is arranged to communicatively couple, to each other, a plurality of nodes (120, 145), wherein said plurality of nodes (120, 145) comprises a plurality of luminaires (120) arranged for illuminating one or more spaces, the control apparatus (110-k, 140-m) comprising:
a communication portion (112-k, 142-m) for communicating with other apparatuses via the first network and a second network; and
a control portion (111-k, 141-k) arranged to:
derive, based on one or more occupancy states that are associated with the node (120-k, 145-m), a node occupancy state that pertains to a location of the node (120-k, 145-m) within the one or more spaces and indicates one of occupancy or non-occupancy at the location of the node;
receive, via the first network, one or more status indications originating from other ones of the plurality of nodes (120, 145) of the first network, wherein said status indications are indicative of respective occupancy states at respective locations of said other ones of the plurality of other nodes (120, 145);
**characterized in that** the control portion (111-k, 141-k) is arranged to:
derive, based on said one or more status indications, at least one regional occupancy state such that each regional occupancy state pertains to a respective plurality of other locations within the one or more spaces and indicates one of occupancy or non-occupancy at the respective plurality of other locations; and
broadcast, via the second network to one or more external apparatuses (150) that are external to the first network, a network occupancy status message that indicates the node occupancy state and the at least one regional occupancy state.

2. An apparatus (110-k, 140-m) according to claim 1, wherein said one or more status indications comprise one or more of the following:
one or more indications of a respective one of the plurality of luminaires (120) switching on its light output;
one or more indications of a respective one of the plurality of luminaires (120) adjusting its light output to a stand-by light intensity;
one or more indications of a respective occupancy state derived at a respective one of the plurality of nodes (120, 145) of the first network;

3. An apparatus (110-k, 140-m) according to claim 1 or 2, wherein the control portion (111-k, 141-m) is arranged to derive the node occupancy state based on one or more of a local occupancy state and respective remote occupancy states derived for those ones of the plurality of nodes (120, 145) that are assigned to a same group with the node (120-k, 145-m), wherein the lighting control portion (111-k) is arranged to:
derive the local occupancy state based on a sensor signal received from an occupancy sensor arranged for monitoring occupancy at the location of the node (120-k, 145-m),
derive, based on respective status indications originating therefrom, the respective remote occupancy states derived for those ones of the plurality of nodes (120, 145) that are assigned to the same group with the node (120-k, 145-m).

4. An apparatus (110-k, 140-m) according to any of claims 1 to 3, wherein the at least one regional occupancy state comprises a network occupancy state and wherein the control portion (111-k, 141-m) is arranged to:
derive a respective remote occupancy state for said other ones of the plurality of nodes (120, 145) based on one or more status indications received therefrom; and
derive the network occupancy state based on the respective remote occupancy states.

5. An apparatus (110-k, 140-m) according to any of claims 1 to 4, wherein the at least one regional occupancy state comprises one or more proximity group occupancy states and wherein the control portion (111-k, 141-m) is arranged to:
derive, based on one or more status indications originating therefrom, a respective remote occupancy state for those other ones of the plurality of nodes (120, 145) that are within any of one or more predefined distance ranges from the node (120-k, 145-m); and
derive, based on the remote occupancy states derived therefor, the respective proximity group occupancy state for those other ones of the plurality nodes (120, 145) that are within the respective one of said one or more predefined distance ranges from the node (120-k, 145-m).

6. An apparatus (110-k, 140-m) according to claim 5, wherein one or both of the following apply:
the one or more status indications are received in one or more status messages via a wireless network and the control portion (111-k, 141-m) is arranged to estimate the distance between the node (120-k, 145-m) and another one of the plurality of nodes (120, 145) based on respective received signal strength indications, RSSIs, derived based on one or more status messages received from the respective other one of the plurality of nodes (120, 145);
the one or more status indications are received in one or more status messages via a wireless mesh network and wherein the control portion (111-k, 141-m) is arranged to estimate the distance between the node (120-k, 145-m) and another one of the plurality of nodes (120, 145) based on respective hop counts indicated in one or more status messages originating from the respective other one of the plurality of nodes (120, 145).

7. An apparatus (110-k, 140-m) according to any of claims 1 to 6, wherein the at least one regional occupancy state comprises one or more spatial group occupancy states and wherein the control portion (111-k, 145-m) is arranged to:
derive, based on respective status indications originating therefrom, a respective remote occupancy state for those other ones of the plurality of nodes (120, 145) that are assigned to any of one or more spatial groups, and
derive, for each spatial group, the respective spatial group occupancy state based on the respective remote occupancy states derived for those other ones of the plurality of nodes (120, 145) that that are assigned to the respective one of the one or more spatial groups.

8. An apparatus (110-k, 140-m) according to any of claims 1 to 7, wherein the one or more status indications are received via a Bluetooth Low Energy Mesh network.

9. An apparatus (110-k, 140-m) according to any of claims 1 to 8, wherein the control portion (111-k, 141-m) is arranged to broadcast the network occupancy status message in a Bluetooth Low Energy advertising protocol data unit.

10. An apparatus (110-k, 140-m) according to any of claim 1 to 9, wherein the control portion (111-k, 141-k) is arranged to:
receive, via the second network, a request to include respective specific types of occupancy indications as the node occupancy state and the at least one regional occupancy state of the network occupancy status message; and
compose at least one subsequent network occupancy status message according to said request.

11. An apparatus (110-k, 140-m) according to any of claims 1 to 10, wherein the control apparatus (110-k, 140-m) comprises one of the following:
a lighting control apparatus (110-k) for a luminaire (120-k) of said plurality of luminaires (120), wherein the control portion comprises a lighting control portion (111-k)further arranged to control one or more aspects of light output of at least one source (121-k) of the luminaire (120-k); or
a sensor control apparatus (140-m) for a sensor unit (145-m) coupled via the first network to said plurality of luminaires (120), wherein the control portion comprises a sensor control portion (141-m).

12. A luminaire (120-k) comprising a control apparatus (111-k) according to any of claims 1 to 11 and at least one light source (121-k), wherein the control portion comprises a lighting control portion (111-k) further arranged to control one or aspects of light output of the at least one source (121-k).

13. A luminaire (120-k) according to claim 12, further comprising a sensor portion (123-k) including an occupancy sensor arranged to provide the lighting control portion (111-k) with a sensor signal that is descriptive of occupancy at the location of the luminaire (120-k).

14. A method (200) in a node (120-k, 145-m) of a first network that is arranged to communicatively couple, to each other, a plurality of nodes (120, 145), wherein said plurality of nodes (120, 145) comprises a plurality of luminaires (120) arranged for illuminating one or more spaces, the method (200) comprising:
deriving (202), based on one or more occupancy states that are associated with the node (120-k, 145-m), a node occupancy state that pertains to a location of the node (120-k, 145-m) within the one or more spaces and indicates one of occupancy or non-occupancy at the location of the node; and
receiving (204), via the first network, one or more status indications originating from other ones of the plurality of nodes (120, 145) of the first network, wherein said status indications are indicative of respective occupancy states at respective locations of said other ones of the plurality of other nodes (120, 145);
**characterized in that** the method (200) comprises:
deriving (206), based on said one or more status indications, at least one regional occupancy state such that each regional occupancy state pertains to a respective plurality of other locations within the one or more spaces and indicates one of occupancy or non-occupancy at the respective plurality of other locations; and
broadcasting (208), via a second network to one or more external apparatuses (150) that are external to the first network, a network occupancy status message that indicates the node occupancy state and the at least one regional occupancy state.

15. A computer program comprising computer readable program code (325) configured to cause performing at least the method (200) according to claim 14 when said program code (325) is executed on a computing apparatus (300) provided with a communication means (330) for wired or wireless communication with other apparatuses.

## Patentansprüche

1. Steuerungsvorrichtung (110-k, 140-m) für einen Knoten (120-k, 145-m) eines ersten Netzwerks, die dazu eingerichtet ist, mehrere Knoten (120, 145) kommunikativ miteinander zu koppeln, wobei die mehreren Knoten (120, 145) mehrere Leuchten (120) umfassen, die zum Beleuchten eines oder mehrerer Räume angeordnet sind, wobei die Steuerungsvorrichtung (110-k, 140-m) Folgendes umfasst:
einen Kommunikationsteil (112-k, 142-m) zum Kommunizieren mit anderen Vorrichtungen über das erste Netzwerk und ein zweites Netzwerk; und
einen Steuerteil (111-k, 141-k), der zu Folgendem ausgelegt ist:
Ableiten, basierend auf einem oder mehreren Belegungszuständen, die mit dem Knoten (120-k, 145-m) assoziiert sind, eines Knotenbelegungszustands, der sich auf einen Ort des Knotens (120-k, 145-m) innerhalb des einen oder der mehreren Räume bezieht und eine Belegung oder Nichtbelegung an dem Ort des Knotens angibt;
Empfangen, über das erste Netzwerk, einer oder mehrerer Statusanzeigen, die von anderen der mehreren Knoten (120, 145) des ersten Netzwerks stammen, wobei die Statusanzeigen jeweilige Belegungszustände an jeweiligen Orten der anderen der mehreren anderen Knoten (120, 145) angeben;
**dadurch gekennzeichnet, dass** der Steuerteil (111-k, 141-k) zu Folgendem ausgelegt ist:
Ableiten, basierend auf der einen oder den mehreren Statusanzeigen, mindestens eines regionalen Belegungszustands, so dass jeder regionale Belegungszustand eine jeweilige Vielzahl von anderen Orten innerhalb des einen oder der mehreren Räume betrifft und eine Belegung oder Nichtbelegung an der jeweiligen Vielzahl von anderen Orten angibt; und
Senden, über das zweite Netzwerk an eine oder mehrere externe Vorrichtungen (150), die sich außerhalb des ersten Netzwerks befinden, einer Netzwerkbelegungs-Statusnachricht, die den Knotenbelegungszustand und den mindestens einen regionalen Belegungszustand angibt.

2. Vorrichtung (110-k, 140-m) nach Anspruch 1, wobei die eine oder die mehreren Statusanzeigen eines oder mehrere von Folgendem umfassen:
eine oder mehrere Angaben, dass eine jeweilige der Vielzahl von Leuchten (120) ihre Lichtausgabe einschaltet;
eine oder mehrere Angaben einer jeweiligen der Vielzahl von Leuchten (120), die ihre Lichtausgabe auf eine Bereitschaftslichtintensität einstellen;
eine oder mehrere Angaben eines jeweiligen Belegungszustands, die an einem jeweiligen der mehreren Knoten (120, 145) des ersten Netzwerks abgeleitet sind;

3. Vorrichtung (110-k, 140-m) nach Anspruch 1 oder 2, wobei der Steuerteil (111-k, 141-m) dazu ausgelegt ist, den Knotenbelegungszustand basierend auf einem oder mehreren eines lokalen Belegungszustands und jeweiliger entfernter Belegungszustände abzuleiten, die für diejenigen der mehreren Knoten (120, 145) abgeleitet sind, die einer gleichen Gruppe mit dem Knoten (120-k, 145-m) zugewiesen sind (111-k), wobei der Beleuchtungssteuerteil zu Folgendem ausgelegt ist:
Ableiten des lokalen Belegungszustands basierend auf einem Sensorsignal, das von einem Belegungssensor empfangen wird, der zum Überwachen der Belegung an dem Ort des Knotens (120-k, 145-m) eingerichtet ist,
Ableiten, basierend auf davon stammenden entsprechenden Statusanzeigen, der entsprechenden Fernbelegungszustände, die für diejenigen der Vielzahl von Knoten (120, 145) abgeleitet werden, die der gleichen Gruppe wie der Knoten (120-k, 145-m) zugewiesen sind.

4. Vorrichtung (110-k, 140-m) nach einem der Ansprüche 1 bis 3, wobei der mindestens eine regionale Belegungszustand einen Netzwerkbelegungszustand umfasst und wobei der Steuerteil (111-k, 141-m) zu Folgendem ausgelegt ist:
Ableiten eines jeweiligen Fernbelegungszustands für die anderen der Vielzahl von Knoten (120, 145) basierend auf einer oder mehreren von ihnen empfangenen Statusanzeigen; und
Ableiten des Netzwerk-Belegungszustands basierend auf den jeweiligen Fernbelegungszuständen.

5. Vorrichtung (110-k, 140-m) nach einem der Ansprüche 1 bis 4, wobei der mindestens eine regionale Belegungszustand einen oder mehrere Näherungsgruppen-Belegungszustände umfasst, und wobei der Steuerteil (111-k, 141-m) zu Folgendem ausgelegt ist:
Ableiten, basierend auf einer oder mehreren davon ausgehenden Statusanzeigen, eines jeweiligen Fernbelegungszustands für diejenigen anderen der Vielzahl von Knoten (120, 145), die innerhalb eines oder mehrerer vordefinierter Abstandsbereiche von dem Knoten (120-k, 145-m) liegen; und
Ableiten, basierend auf den dafür abgeleiteten Fernbelegungszuständen, des jeweiligen Näherungsgruppen-Belegungszustands für diejenigen anderen der Vielzahl von Knoten (120, 145), die innerhalb des jeweiligen einen des einen oder der mehreren vordefinierten Abstandsbereiche von dem Knoten (120-k, 145-m) liegen.

6. Vorrichtung (110-k, 140-m) nach Anspruch 5, wobei eines oder beides von Folgendem zutrifft:
Die eine oder mehreren Statusanzeigen werden in einer oder mehreren Statusnachrichten über ein drahtloses Netzwerk empfangen, und der Steuerteil (111-k, 141-m) ist so angeordnet, dass er die Entfernung zwischen dem Knoten (120-k, 145-m) und einem anderen der Vielzahl von Knoten (120, 145) basierend auf jeweiligen empfangenen Signalstärkeanzeigen (RSSIs) abschätzt, die basierend auf einer oder mehreren Statusnachrichten, die von dem jeweiligen anderen der Vielzahl von Knoten (120, 145) empfangen werden, abgeleitet werden;
Die eine oder die mehreren Statusanzeigen werden in einer oder mehreren Statusnachrichten über ein drahtloses Mesh-Netzwerk empfangen, und wobei der Steuerteil (111-k, 141-m) dazu ausgelegt ist, den Abstand zwischen dem Knoten (120-k, 145-m) und einem anderen der Vielzahl von Knoten (120, 145) basierend auf jeweiligen Hop-Zählungen zu schätzen, die in einer oder mehreren Statusnachrichten angegeben sind, die von dem jeweiligen anderen der Vielzahl von Knoten (120, 145) stammen.

7. Vorrichtung (110-k, 140-m) nach einem der Ansprüche 1 bis 6, wobei der mindestens eine regionale Belegungszustand einen oder mehrere räumliche Gruppenbelegungszustände umfasst und wobei der Steuerteil (111-k, 145-m) zu Folgendem ausgelegt ist:
Ableiten, basierend auf davon ausgehenden jeweiligen Statusanzeigen, eines jeweiligen Fernbelegungszustands für diejenigen anderen der Vielzahl von Knoten (120, 145), die einer oder mehreren räumlichen Gruppen zugewiesen sind; und
Ableiten, für jede räumliche Gruppe, des jeweiligen räumlichen Gruppenbelegungszustands basierend auf den jeweiligen Fernbelegungszuständen, die für jene anderen der Vielzahl von Knoten (120, 145) abgeleitet wurden, die der jeweiligen einen der einen oder mehreren räumlichen Gruppen zugewiesen sind.

8. Vorrichtung (110-k, 140-m) nach einem der Ansprüche 1 bis 7, wobei die eine oder die mehreren Statusanzeigen über ein Bluetooth Low Energy Mesh-Netzwerk empfangen werden.

9. Vorrichtung (110-k, 140-m) nach einem der Ansprüche 1 bis 8, wobei der Steuerteil (111-k, 141-m) dazu ausgelegt ist, die Netzwerkbelegungs-Statusnachricht in einer Bluetooth-Low-Energy-Werbeprotokolldateneinheit zu senden.

10. Vorrichtung (110-k, 140-m) nach einem der Ansprüche 1 bis 9, wobei der Steuerteil (111-k, 141-k) zu Folgendem ausgelegt ist:
Empfangen, über das zweite Netzwerk, einer Anforderung, jeweilige spezifische Arten von Belegungsanzeigen als den Knotenbelegungszustand und den mindestens einen regionalen Belegungszustand der Netzwerkbelegungs-Statusnachricht einzuschließen; und
Erstellen mindestens einer nachfolgenden Netzwerkbelegungs-Statusnachricht gemäß dieser Anforderung.

11. Vorrichtung (110-k, 140-m) nach einem der Ansprüche 1 bis 10, wobei die Steuerungsvorrichtung (110-k, 140-m) eines von Folgendem umfasst:
eine Beleuchtungssteuerungsvorrichtung (110-k) für eine Leuchte (120-k) der Vielzahl von Leuchten (120), wobei der Steuerteil einen Beleuchtungssteuerteil (111-k) umfasst, der ferner dazu ausgelegt ist, einen oder mehrere Aspekte der Lichtausgabe mindestens einer Quelle (121-k) der Leuchte (120-k) zu steuern; oder
eine Sensorsteuerungsvorrichtung (140-m) für eine Sensoreinheit (145-m), die über das erste Netzwerk mit der Vielzahl von Leuchten (120) gekoppelt ist, wobei der Steuerteil einen Sensorsteuerteil (141-m) umfasst.

12. Leuchte (120-k), die eine Steuerungsvorrichtung (111-k) nach einem der Ansprüche 1 bis 11 und mindestens eine Lichtquelle (121-k) umfasst, wobei der Steuerteil einen Beleuchtungssteuerteil (111-k) umfasst, der ferner dazu ausgelegt ist, einen oder Aspekte der Lichtausgabe der mindestens einen Quelle (121-k) zu steuern.

13. Leuchte (120-k) nach Anspruch 12, die ferner einen Sensorteil (123-k) umfasst, der einen Belegungssensor beinhaltet, der dazu ausgelegt ist, dem Beleuchtungssteuerteil (111-k) ein Sensorsignal bereitzustellen, das die Belegung an dem Ort der Leuchte (120-k) beschreibt.

14. Verfahren (200) in einem Knoten (120-k, 145-m) eines ersten Netzwerks, das dazu ausgelegt ist, eine Vielzahl von Knoten (120, 145) kommunikativ miteinander zu koppeln, wobei die Vielzahl von Knoten (120, 145) eine Vielzahl von Leuchten (120) umfasst, die zum Beleuchten eines oder mehrerer Räume angeordnet sind, wobei das Verfahren (200) Folgendes umfasst:
Ableiten (202), basierend auf einem oder mehreren Belegungszuständen, die mit dem Knoten (120-k, 145-m) assoziiert sind, eines Knotenbelegungszustands, der sich auf einen Ort des Knotens (120-k, 145-m) innerhalb des einen oder der mehreren Räume bezieht und eine Belegung oder Nichtbelegung an dem Ort des Knotens angibt; und
Empfangen (204), über das erste Netzwerk, einer oder mehrerer Statusanzeigen, die von anderen der Vielzahl von Knoten (120, 145) des ersten Netzwerks stammen, wobei die Statusanzeigen jeweilige Belegungszustände an jeweiligen Orten der anderen der Vielzahl von anderen Knoten (120, 145) angeben;
**dadurch gekennzeichnet, dass** das Verfahren (200) Folgendes umfasst:
Ableiten (206), basierend auf der einen oder den mehreren Statusanzeigen, mindestens eines regionalen Belegungszustands, so dass jeder regionale Belegungszustand eine jeweilige Vielzahl von anderen Orten innerhalb des einen oder der mehreren Räume betrifft und eine Belegung oder Nichtbelegung an der jeweiligen Vielzahl von anderen Orten angibt; und
Rundsenden (208), über ein zweites Netzwerk an eine oder mehrere externe Vorrichtungen (150), die sich außerhalb des ersten Netzwerks befinden, einer Netzwerkbelegungs-Statusnachricht, die den Knotenbelegungszustand und den mindestens einen regionalen Belegungszustand angibt.

15. Computerprogramm, das computerlesbaren Programmcode (325) umfasst, der dazu ausgelegt ist, das Durchführen mindestens des Verfahrens (200) nach Anspruch 14 zu bewirken, wenn der Programmcode (325) auf einer Rechenvorrichtung (300) ausgeführt wird, die mit einem Kommunikationsmittel (330) zur drahtgebundenen oder drahtlosen Kommunikation mit anderen Vorrichtungen versehen ist.

## Revendications

1. Appareil de commande (110-k, 140-m) d'un nœud (120-k, 145-m) d'un premier réseau qui est agencé pour coupler de manière communicative, entre eux, une pluralité de nœuds (120, 145), ladite pluralité de nœuds (120, 145) comprenant une pluralité de luminaires (120) agencés pour éclairer un ou plusieurs espaces, l'appareil de commande (110-k, 140-m) comprenant :
une partie de communication (112-k, 142-m) pour communiquer avec d'autres appareils par l'intermédiaire du premier réseau et d'un deuxième réseau ; et
une partie de commande (111-k, 141-k) agencée pour :
dériver, sur la base d'un ou plusieurs états d'occupation qui sont associés au nœud (120-k, 145-m), un état d'occupation du nœud qui se rapporte à un emplacement du nœud (120-k, 145-m) dans le ou les espaces et indique l'une d'une occupation ou d'une non-occupation à l'emplacement du nœud ;
recevoir, par l'intermédiaire du premier réseau, une ou plusieurs indications d'état provenant d'autres nœuds de la pluralité de nœuds (120, 145) du premier réseau, lesdites indications d'état étant indicatives d'états d'occupation respectifs à des emplacements respectifs desdits autres nœuds de la pluralité d'autres nœuds (120, 145) ;
**caractérisé en ce que** la partie de commande (111-k, 141-k) est agencée pour :
dériver, sur la base desdites une ou plusieurs indications d'état, au moins un état d'occupation régional de sorte que chaque état d'occupation régional se rapporte à une pluralité respective d'autres emplacements dans le ou les espaces et indique l'une d'une occupation ou d'une non-occupation à la pluralité respective d'autres emplacements ; et
diffuser, par l'intermédiaire du second réseau, vers un ou plusieurs appareils externes (150) qui sont externes au premier réseau, un message d'état d'occupation du réseau qui indique l'état d'occupation du nœud et l'au moins un état d'occupation régional.

2. Appareil (110-k, 140-m) selon la revendication 1, lesdites une ou plusieurs indications d'état comprenant une ou plusieurs des indications suivantes :
une ou plusieurs indications d'un luminaire respectif de la pluralité de luminaires (120) allumant sa sortie lumineuse ;
une ou plusieurs indications d'un luminaire respectif de la pluralité de luminaires (120) ajustant sa sortie lumineuse à une intensité lumineuse de veille ;
une ou plusieurs indications d'un état d'occupation respectif dérivé à un nœud respectif de la pluralité de nœuds (120, 145) du premier réseau ;

3. Appareil (110-k, 140-m) selon la revendication 1 ou 2, la partie de commande (111-k, 141-m) étant agencée pour dériver l'état d'occupation du nœud sur la base d'un ou de plusieurs parmi un état d'occupation local et des états d'occupation à distance respectifs dérivés pour ceux de la pluralité de nœuds (120, 145) qui sont affectés à un même groupe avec le nœud (120-k, 145-m), la partie de commande d'éclairage (111-k) étant agencée pour :
dériver l'état d'occupation local sur la base d'un signal de capteur reçu d'un capteur d'occupation agencé pour surveiller l'occupation à l'emplacement du nœud (120-k, 145-m),
dériver, sur la base d'indications d'état respectives provenant de celle-ci, les états d'occupation à distance respectifs dérivés pour ceux de la pluralité de nœuds (120, 145) qui sont affectés au même groupe que le nœud (120-k, 145-m).

4. Appareil (110-k, 140-m) selon l'une quelconque des revendications 1 à 3, l'au moins un état d'occupation régional comprenant un état d'occupation de réseau et la partie de commande (111-k, 141-m) étant agencée pour :
dériver un état d'occupation à distance respectif pour lesdits autres nœuds de la pluralité de nœuds (120, 145) sur la base d'une ou plusieurs indications d'état reçues de ceux-ci ; et
dériver l'état d'occupation de réseau sur la base des états d'occupation à distance respectifs.

5. Appareil (110-k, 140-m) selon l'une quelconque des revendications 1 à 4, l'au moins un état d'occupation régional comprenant un ou plusieurs états d'occupation de groupe de proximité et la partie de commande (111-k, 141-m) étant agencée pour :
dériver, sur la base d'une ou plusieurs indications d'état provenant de celle-ci, un état d'occupation à distance respectif pour ces autres nœuds de la pluralité de nœuds (120, 145) qui se trouvent dans une ou plusieurs plages de distance prédéfinies par rapport au nœud (120-k, 145-m) ; et
dériver, sur la base des états d'occupation à distance obtenus, l'état d'occupation du groupe de proximité respectif pour ces autres nœuds de la pluralité de nœuds (120, 145) qui se trouvent dans la plage respective desdites une ou plusieurs plages de distance prédéfinies par rapport au nœud (120-k, 145-m).

6. Appareil (110-k, 140-m) selon la revendication 5, l'un ou les deux éléments suivants s'appliquant :
la ou les indications d'état étant reçues dans un ou plusieurs messages d'état par l'intermédiaire d'un réseau sans fil et la partie de commande (111-k, 141-m) étant agencée pour estimer la distance entre le nœud (120-k, 145-m) et un autre nœud de la pluralité de nœuds (120, 145) sur la base d'indications respectives de puissance de signal reçu, RSSI, dérivées sur la base d'un ou plusieurs messages d'état reçus de l'autre nœud respectif de la pluralité de nœuds (120, 145) ;
la ou les indications d'état étant reçues dans un ou plusieurs messages d'état par l'intermédiaire d'un réseau maillé sans fil et la partie de commande (111-k, 141-m) étant agencée pour estimer la distance entre le nœud (120-k, 145-m) et un autre de la pluralité de nœuds (120, 145) sur la base des nombres de sauts respectifs indiqués dans un ou plusieurs messages d'état provenant de l'autre nœud respectif de la pluralité de nœuds (120, 145).

7. Appareil (110-k, 140-m) selon l'une quelconque des revendications 1 à 6, l'au moins un état d'occupation régional comprenant un ou plusieurs états d'occupation de groupe spatial et la partie de commande (111-k, 145-m) étant agencée pour :
dériver, sur la base des indications d'état respectives provenant de celle-ci, un état d'occupation distant respectif pour ces autres nœuds de la pluralité de nœuds (120, 145) qui sont affectés à l'un quelconque d'un ou de plusieurs groupes spatiaux ; et
dériver, pour chaque groupe spatial, l'état d'occupation du groupe spatial respectif sur la base des états d'occupation à distance respectifs dérivés pour ces autres nœuds de la pluralité de nœuds (120, 145) qui sont affectés à l'un groupe respectif du ou des groupes spatiaux.

8. Appareil (110-k, 140-m) selon l'une quelconque des revendications 1 à 7, la ou les indications d'état étant reçues par l'intermédiaire d'un réseau maillé Bluetooth à faible énergie.

9. Appareil (110-k, 140-m) selon l'une quelconque des revendications 1 à 8, la partie de commande (111-k, 141-m) étant agencée pour diffuser le message d'état d'occupation du réseau dans une unité de données de protocole publicitaire Bluetooth à faible énergie.

10. Appareil (110-k, 140-m) selon l'une quelconque des revendications 1 à 9, la partie de commande (111-k, 141-k) étant agencée pour :
recevoir, par l'intermédiaire du second réseau, une demande d'inclusion de types spécifiques respectifs d'indications d'occupation en tant qu'état d'occupation du nœud et au moins un état d'occupation régional dans le message d'état d'occupation du réseau ; et
composer au moins un message d'état d'occupation du réseau ultérieur en fonction de ladite demande.

11. Appareil (110-k, 140-m) selon l'une quelconque des revendications 1 à 10, l'appareil de commande (110-k, 140-m) comprenant l'un des éléments suivants :
un appareil de commande d'éclairage (110-k) pour un luminaire (120-k) de ladite pluralité de luminaires (120), la partie de commande comprenant une partie de commande d'éclairage (111-k) agencée en outre pour commander un ou plusieurs aspects de la sortie de lumière d'au moins une source (121-k) du luminaire (120-k) ; ou
un appareil de commande de capteur (140-m) pour une unité de capteur (145-m) couplée par l'intermédiaire du premier réseau à ladite pluralité de luminaires (120), la partie de commande comprenant une partie de commande de capteur (141-m).

12. Luminaire (120-k) comprenant un appareil de commande (111-k) selon l'une quelconque des revendications 1 à 11 et au moins une source de lumière (121-k), la partie de commande comprenant une partie de commande d'éclairage (111-k) agencée en outre pour commander un ou des aspects de la sortie de lumière de l'au moins une source (121-k).

13. Luminaire (120-k) selon la revendication 12, comprenant en outre une partie capteur (123-k) comprenant un capteur d'occupation agencé pour fournir à la partie de commande d'éclairage (111-k) un signal de capteur qui est descriptif de l'occupation à l'emplacement du luminaire (120-k).

14. Procédé (200) dans un nœud (120-k, 145-m) d'un premier réseau qui est agencé pour coupler communicativement, entre eux, une pluralité de nœuds (120, 145), ladite pluralité de nœuds (120, 145) comprenant une pluralité de luminaires (120) agencés pour éclairer un ou plusieurs espaces, le procédé (200) comprenant :
la dérivation (202), sur la base d'un ou plusieurs états d'occupation associés au nœud (120-k, 145-m), d'un état d'occupation du nœud qui se rapporte à un emplacement du nœud (120-k, 145-m) dans le ou les espaces et indique l'une d'une occupation ou d'une non-occupation à l'emplacement du nœud ; et
la réception (204), par l'intermédiaire du premier réseau, d'une ou plusieurs indications d'état provenant d'autres nœuds de la pluralité de nœuds (120, 145) du premier réseau, lesdites indications d'état étant indicatives d'états d'occupation respectifs à des emplacements respectifs desdits autres nœuds de la pluralité d'autres nœuds (120, 145) ;
**caractérisé en ce que** le procédé (200) comprend :
la dérivation (206), sur la base desdites une ou plusieurs indications d'état, d'au moins un état d'occupation régional de sorte que chaque état d'occupation régional se rapporte à une pluralité respective d'autres emplacements dans le ou les espaces et indique l'une d'une occupation ou d'une non-occupation à la pluralité respective d'autres emplacements ; et
la diffusion (208), par l'intermédiaire d'un second réseau, vers un ou plusieurs appareils externes (150) qui sont externes au premier réseau, d'un message d'état d'occupation du réseau indiquant l'état d'occupation du nœud et au moins un état d'occupation régional.

15. Programme informatique comprenant un code de programme lisible par ordinateur (325) configuré pour provoquer la réalisation d'au moins le procédé (200) selon la revendication 14 lorsque ledit code de programme (325) est exécuté sur un appareil informatique (300) pourvu d'un moyen de communication (330) pour la communication filaire ou sans fil avec d'autres appareils.
